**Europäisches Patentamt**

**European Patent Office**

**Office européen des brevets**

(19)

(11) Veröffentlichungsnummer: **0 249 095**
**B1**

(12) ## EUROPÄISCHE PATENTSCHRIFT

(45) Veröffentlichungstag der Patentschrift:
**27.12.90**

(51) Int. Cl.⁵: **A23L 1/223**, A23L 1/221

(21) Anmeldenummer: **87107762.4**

(22) Anmeldetag: **27.05.87**

(54) Verfahren zur Aufarbeitung von schwarzem Pfeffer.

(30) Priorität: **29.05.86 HU 225786**

(43) Veröffentlichungstag der Anmeldung:
**16.12.87 Patentblatt 87/51**

(45) Bekanntmachung des Hinweises auf die Patenterteilung:
**27.12.90 Patentblatt 90/52**

(84) Benannte Vertragsstaaten:
**DE IT NL**

(56) Entgegenhaltungen:
**US-A- 2 384 532**

**DAS GROSSE LEBENSMITTELLEXIKON, 1962,
Seiten 313,314, Umschau-Verlag, Frankfurt/Main
Schormüller, Alkaloidhaltige Genussmittel, Gewürze,
Kochsalz**

(73) Patentinhaber: **COMPACK Kereskedelmi Csomagolo
Vállalat, Landler Jeno u. 23, H-1078 Budapest(HU)**

(72) Erfinder: **Dörnyei, Jozsef, Dr., Hevesi Gy. Strasse 19/c,
H-1157 Budapest(HU)**
Erfinder: **Horvath, Lajosné, Dr., Néphadsereg
Strasse 22, H-1055 Budapest(HU)**
Erfinder: **Léder, Ferencné, Szegedi Strasse 6,
H-1139 Budapest(HU)**
Erfinder: **Monda, Sandor, Narcisz Strasse 51,
H-1124 Budapest(HU)**

(74) Vertreter: **Finck, Dieter et al, Patentanwälte v. Füner,
Ebbinghaus, Finck Mariahilfplatz 2 & 3,
D-8000 München 90(DE)**

## Beschreibung

Die Erfindung betrifft ein Verfahren zur Verarbeitung von schwarzem Pfeffer.

Schwarzer Pfeffer sind die getrockneten, in unreifem Zustand geernteten beerenartigen Früchte von Piper nigrum L., die als Körner oder feingemahlen verwendet werden.

Gemäß den deutschen Normen DIH 10 200, Oktober 1967, besteht weißer Pfeffer aus den getrockneten Kernen ganzer reifer beerenartiger Früchte von Piper nigrum L. oder aus geschältem schwarzem Pfeffer. Weißer Pfeffer wird wie der schwarze Pfeffer in Form von Körnern oder in gemahlenem Zustand verwendet.

Aus dem Buch von D. Schormüller, Alkaloide Genußmittel, Gewürze, Kochsalz, Springer-Verlag Berlin 1970, S. 512 und 516 ist es zwar bekannt, die bei der Herstellung des weißen Pfeffers durch Schälen anfallenden Pfefferschalen gemahlenem schwarzem Pfeffer zuzumischen. Diese Zumischung gilt jedoch wegen der damit verbundenen Qualitätsverschlechterung als Verfälschung des gemahlenen schwarzen Pfeffers.

Obwohl schwarzer Pfeffer in der Regel billiger ist als weißer Pfeffer, hat sich die industrielle Gewinnung von weißem Pfeffer durch Schälen von schwarzem Pfeffer bisher als nicht effektiv erwiesen.

Die der Erfindung zugrundeliegende Aufgabe besteht nun darin, die gesamte Masse des schwarzen Pfeffers zu hochwertigen gemahlenen Pfefferprodukten zu verarbeiten.

Diese Aufgabe wird erfindungsgemäß dadurch gelöst, daß die Körner des schwarzen Pfeffers gereinigt werden; die gereinigten Körner des schwarzen Pfeffers nach Korngrößen klassifiziert werden, und zwar in eine kleinste schälbare Fraktion, bei der die Körner 3,5 mm bis 4,2 mm groß sind, und in wenigstens eine weitere schälbare Fraktion, die Körner der klassifizierten schälbaren Fraktionen getrennt voneinander in einer Schälmaschine für sphärische Körner geschält werden, wobei die Schälmaschine immer gefüllt gehalten wird, die beim Schälen der Körner der schälbaren Fraktionen abgetrennten Schalen- und Kernteile mit einem auch kühlend wirkenden Luftstrom abgeführt werden, die mit dem Luftstrom abgeführten Schalen- und Kernteile wiedergewonnen werden, die wiedergewonnen Schalen- und Kernteile als schwarzer Pfeffer verwertet werden und die geschälten und von Schalen- und Kernteilen befreiten Körner der schälbaren Fraktionen zu einem Gewürz vom Charakter des weißen Pfeffers gemahlen werden.

Zweckmäßigerweise wird das Schälen in mehreren Zyklen vorgenommen.

Vorteilhafterweise werden die nichtschälbaren Körner, die kleiner sind als die untere Korngröße der keinsten schälbaren Fraktion, zusammen mit den zurückgewonnen Schalen- und Kernteilen gemahlen, wobei das gewonnene Mahlgut zum Verschneiden von gemahlenem schwarzen Pfeffer verwendet wird.

Vorzugsweise wird als kleinste Korngröße für die kleinste schälbare Fraktion 4 mm und als unterste Korngröße der weiteren schälbaren Fraktion 5 mm gewählt.

Es hat sich überraschenderweise gezeigt, daß, wenn stockig gewordener modriger, bzw. ranziger und muffiger schwarzer Pfeffer nach dem erfindungsgemäßen Verfahren verarbeitet wird, die Endprodukte, nämlich der gemahlene weiße Pfeffer und das als schwarzer Pfeffer verwertbare Produkt qualitativ genauso hochwertig sind als wie wenn normaler schwarzer Pfeffer als Ausgangsprodukt verarbeitet worden wäre. Dies scheint auf die günstige Beeinflussung durch thermische und mechanische Effekte bei der Verarbeitung und durch die intensive Belüftung bei der Abführung der Schalen- und Kernteile zurückzuführen zu sein.

Mit dem erfindungsgemäßen Verfahren ist es möglich, aus den Körnern des schwarzen Pfeffers einerseits hochwertigen gemahlenen weißen Pfeffer und andererseits ein als schwarzer Pfeffer weiterverwertbares Material zu erhalten. Dabei wird die gesamte Masse des eingesetzten schwarzen Pfeffers verwertet.

Das erfindungsgemäße Verfahren wird anhand einer Zeichnung, die schematisch eine Anlage zur Verarbeitung von schwarzem Pfeffer zeigt, näher erläutert.

Die in der Figur skizzierte Vorrichtung ist wie folgt aufgebaut. Das Ausgangsmaterial, der schwarze Pfeffer, gelangt in einen Schütttrichter 1, an dessen Boden sich ein von Hand verstellbarer Schieber 2 befindet. Der bei geöffnetem Schieber 2 aus dem Schütttrichter 1 strömende Pfeffer gelangt bis zu dem unteren Abschnitt eines Becherförderers 3. Unter der oberen Ausströmöffnung des Becherförderers 3 befindet sich auf einem in der Zeichnung nicht dargestellten Gerüst ein Rost 4, der zum Klassifizieren und Trennen der Kornfraktionen über 5 mm, zwischen 4 und 5 mm und unter 4 mm geeignet ist und dementsprechend drei Austrittsöffnungen aufweist, die - in der angegebenen Reihenfolge - mit den Leitungen 5, 6 und 7 verbunden sind. Die Leitung 5 führt zu dem Behälter 8 für Körner über 5 mm Größe, die Leitung 6 ist mit dem für Körner zwischen 4 und 5 mm Größe vorgesehenen Behälter 9 verbunden; die Behälter haben am Boden einen Schieber, durch den die Körner in einen zweiten Becherförderer 10 gelangen.

Unter dem Becherförderer 10, zweckmäßig auf dem Gerüst des Rostes 4, befindet sich eine über mehrere Scheiben verfügende Schälmaschine 11 zum Schälen sphärischer Kerne, deren Ausführung an sich bekannt ist. Da eine derartige Maschine nur dann zufriedenstellend funktioniert, wenn sie gefüllt ist, befindet sich auf der Speiserinne der Maschine ein in der Zeichnung nicht dargestellter Oberlaufstutzen mit einer Weichenstellung. Wenn die Maschine gefüllt ist, fallen die auch weiterhin dosierten Körner automatisch in den entsprechenden Behälter zurück. Das Schälen in einem oder in mehreren Schälgängen erfolgen.

Die Schälmaschine 11 hat zwei Austrittsöffnungen. Durch die erste, die Austrittsöffnung 12, treten die abgeschälten Körner aus. Die Austrittsöffnung 12 kann in wählbarer Weise entweder mit einer Hammermühle 13 oder einer Sammelstelle 14 verbunden werden, wo die abgeschälten Körner in Säcken gesammelt und später einem erneuten Schälgang zugeführt werden.

Die zweite Austrittsöffnung 15 dient zur Entfernung des beim Schälen entstehenden Schalenpulvers und ist - ebenso wie die Sammelstelle der vom Rost 4 aussortierten Körner unter 4 mm Größe - mittels einer Leitung 16 mit einem Filterzyklon 17 verbunden, an den ein Ventilator 18 angeschlossen ist. Die Austrittsöffnung 19 des Filterzyklons 17 ist mit einer zweiten Hammermühle 20 verbunden, in der die zu kleinen Körner und die abgeschälten Schalenstücke gemahlen werden.

Die Austrittsleitung 21 der ersten Hammermühle 13 führt zu einem ersten Schneckenmischer 22, unter dessen Austrittsöffnung ein Sack, Container oder sonstiger Sammelbehälter gestellt werden kann. Die Austrittsleitung 23 der zweiten Hammermühle 20 ist mit einem zweiten Schneckenmischer 24 verbunden; unter dessen Austrittsöffnung wird der Sammelbehälter für das zweite Endprodukt (schwarzer Pfeffer) gestellt.

Die Anordnung wird wie folgt betrieben. Der schwarze Pfeffer wird von Staub und Verunreinigungen befreit, in den Schüttrichter 1 aufgegeben und gelangt mittels des Becherförderers 3 auf den Rost 4, wo er nach Korngröße klassifiziert wird. Die zum Abschälen gelangenden Körner werden abhängend von ihrer Größe den Behältern 8 beziehungsweise 9 zugeführt, während die Körner mit einer Korngröße von unter 4 mm der zweiten Hammermühle 20 zugeführt werden.

Die Schälmaschine 11 zum Schälen sphärischer Körner muß immer gefüllt sein. Nach dem ersten Auffüllen werden die geschälten Körner in der Sammelstelle 14 aufgefangen und dann rezirkuliert.

Die Schälzeit kann über die Durchsatzmenge eingestellt werden. Je nachdem, bis zu welcher Tiefe die Schale und die äußere Schicht des Kernes entfernt werden, ist der Gehalt des inneren Kernes an ätherischen Ölen regulierbar.

Der nach dem Schälen anfallende geschälte Kern des Pfefferkornes wird in der Hammermühle 13 gemahlen. Das Mahlgut wird in dem Schneckenmischer 22 homogenisiert und dann in Säcke gefüllt. Hinsichtlich der Verwendbarkeit in der Lebensmittelindustrie ist das Mehlgut dem weißen Pfeffer gleichwertig.

Aus der Schälmaschine 11 werden Schalenstücke und abgeschliffene Teile der äußeren Kornschicht mit dem intensiven Luftstrom ausgetragen. Ihre Abtrennung erfolgt im Filterzyklon 17.

Die zum Schälen zu kleinen Pfefferkörner und die im Filterzyklon 17 abgeschiedenen Schalenbruchstücke werden in der zweiten Hammermühle 20 gemahlen. Das Mahlgut entfernt sich durch den Schneckenmischer 24 in Form gemahlenen schwarzen Pfeffers zur Abfüllstelle. Es ist zweckmäßig, das Mahlgut dem üblichen schwarzen Pfeffer in einer Menge von zum Beispiel 10-20 % zuzusetzen.

Die Benutzung der Anordnung ist einfach und außerordentlich produktiv.

Beispiel 1

Die Hauptparameter des erfindungsgemäßen Verfahrens wurden zuerst im Laboratorium geprüft. Untersucht wurden vier aus verschiedenen Ursprungsländern beziehungsweise Liefercharchen stammende Pfeffer, deren Bezeichnung, Masse und Korngrößenverteilung in der Tabelle 1 zusammengestellt sind.

Tabelle 1

| Pfeffer | Masse (g) | ≧ Prozentuale Korngrößenverteilung (%) | | | | |
|---|---|---|---|---|---|---|
| | | 5 | 4 | 3,15 | 2 | 0 mm |
| 1 | 490,0 | 13,26 | 76,53 | 9,18 | 1,02 | - |
| 2 | 692,0 | 20,01 | 64,34 | 14,5 | 0,96 | 0,17 |
| 3 | 504,2 | 16,56 | 65,29 | 16,32 | 1,24 | 0,57 |
| 4 | 114,0 | 24,78 | 60,64 | 13,81 | 0,52 | 0,26 |

1 = brasilianischer Pfeffer

2 = indonesischer Pfeffer

3 = Singapore-Pfeffer I

4 = Singepore-Pfeffer II

Die Charge Nr. 3 (Singapore-Pfeffer I) war moderig, die Charge Nummer 4 (Singapore-Pfeffer II) stark moderig. Wie auch das Zeichen ≧ (größer oder gleich) in der Tabelle 1 zeigt, fallen in die Spalte 5 alle Körner, die 5 mm oder größer sind, in die Spalte 4 alle Körner einer Größe zwischen 4 und 5 mm usw. Die letzte Spalte enthält praktisch den Anteil der staubförmigen Verunreinigungen, denn auch das kleinste Pfefferkorn ist größer als 2 mm.

Zunächst wurden die staubförmigen Verunreinigungen durch Schütteln auf einem Sieb entfernt, dann wurden mittels geeigneter Roste die Fraktionen 5 mm und größer beziehungsweise 4-5 mm abgetrennt. Diese Fraktionen wurden getrennt voneinander in eine Schälmaschine für sphärische Kerne (Typ NRG 71/a/4 des italienischen Unternehmens Minghetti) gegeben. Es wurde dafür gesorgt, daß die Schälmaschine immer gefüllt war. Beim Schälen werden die Körner von den rotierenden Schälscheiben an den perforierten Mantel der Maschine gedrückt, wo eine reibende, schleifende Wirkung eintritt. Die Schale wird allmählich abgeschliffen, der Schleifstaub tritt durch die Perforation aus und wird von der senkrecht zur Schälebene gerichteten intensiven Luftströmung mitgerissen. Der Schälstaub wird aus der Luft abgetrennt. Der Luftstrom führt auch einen bedeutenden Teil der beim Schälen entstehenden Wärme ab und dient zur Kühlung. Die größeren Kernteile können die Perforation nicht durchdringen, sie wandern allmählich nach unten, ihre Bewegungen sind zufällig, und so ist der Abrieb beim Durchlaufen der Maschine gleichmäßig. Die Verweilzeit und damit die Leistungsfähigkeit der Maschine kann durch Verstellen des Spaltes an der Austrittsöffnung geregelt werden. Es wird so lange geschält, bis an den austretenden Körnern keine Schalenteile mehr wahrgenommen werden können.

Die Tabelle 2 zeigt, welcher Anteil der einzelnen Proben schälbar war (d.h. die Summe der Fraktionen 5 mm und 4 mm), und ferner, wieviel davon als geschältes Korn und wieviel als Staub (Mahlgut) anfällt.

Tabelle 2

| Charge | schälbarer Anteil % | Kern % | Schalenpulver % |
|---|---|---|---|
| 1 | 89,79 | 65,08 | 34,91 |
| 2 | 84,35 | 60,05 | 39,97 |
| 3 | 81,85 | 55,91 | 43,33 |
| 4 | 85,42 | 59,93 | 40,06 |

1 = brasilianischer Pfeffer        3 = Singapore-Pfeffer I

2 = indonesischer Pfeffer          4 = Singapore-Pfeffer II

Die geschälten Kerne werden fein gemahlen. Das Mahlgut ist ein dem weißen Pfeffer ähnliches, dessen Charakter aufweisendes Gewürz, das frei vom Fremdgerüchen ist und einen Gehalt an ätherischen Ölen aufweist, der größer als der des weißen und kleiner als der des schwarzen Pfeffers ist.

Aus der Tabelle 2 ist ersichtlich, daß der Anteil an abgeschliffener Schale 34,9-40 % beträgt. Der Schälstaub duftet stark und aromatisch nach Pfeffer, seine Farbe ist der des schwarzen Pfeffers ähnlich. Diese abgeschliffenen Schalenteile können den kleinkörnigen Pfefferkörnern zugesetzt und mit diesen zuzammen gemahlen werden. Das Mahlgut wird als schwarzer Pfeffer verwertet.

Beim Schälen der moderigen Chargen wurde festgestellt daß der moderige Geruch aus beiden Fraktionen verschwand, d.h. weder die geschälten Körner noch die entfernten Schalenteile rochen moderig. Zusammensetzung und Aroma der Fraktionen ermöglichten eine unmittelbare Verwendung. Das Verschwinden des moderigen Geruches ist wahrscheinlich mit der beim Schleifen auftretenden Wärme und der intensiven Belüftung zu erklären.

Beispiel 2

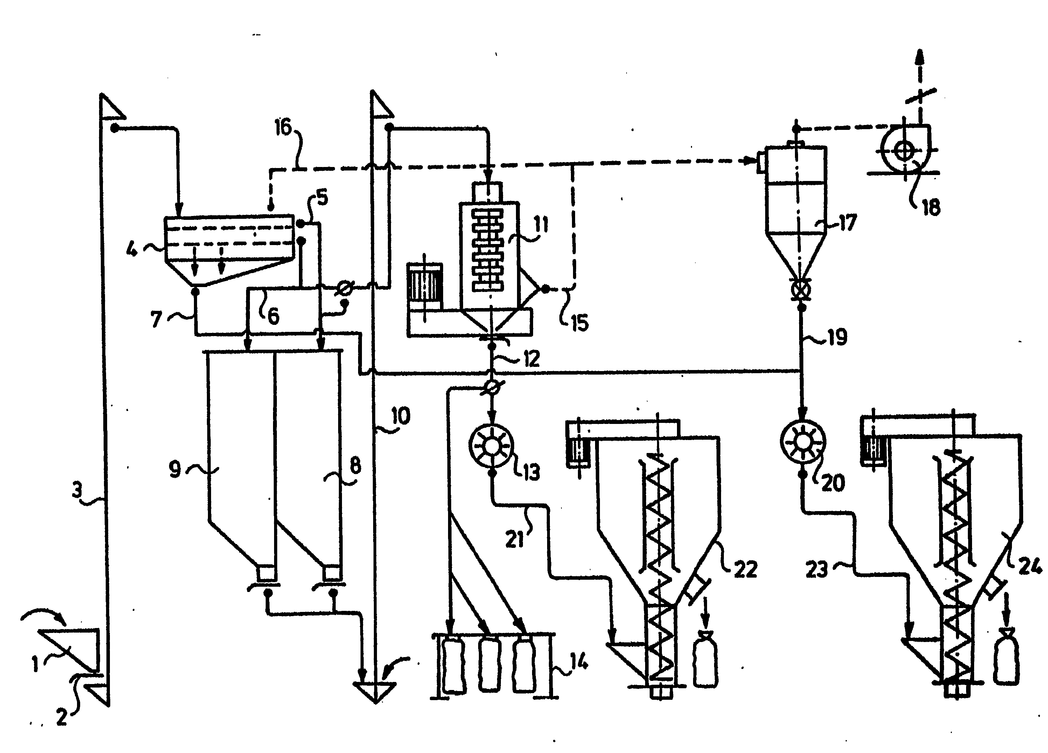

Mit der in Fig. 1 skizzierten Vorrichtung wurden insgesamt 188 kg schwarzer Pfeffer aufgearbeitet. Die Menge der Körner einer Größe von unter 2 mm zusammen mit dem bei der Reinigung entfernten Staub machte 2,48% aus.

Dann wurde der Pfeffer nach Korngröße klassifiziert, wobei folgende Fraktionen anfielen:
5 mm und größer 26,61%
4-5 mm 62,22%
unter 4 mm 9,68%
Die erste und die zweite Fraktion wurden getrennt voneinander geschält, wobei die Schälzeit 3 Minuten betrug, d.h. jedes Korn die Maschine in etwa 3 Minuten durchlief. Die abgeschliffene Schale fiel als eine mehlfeine Fraktion an. Sie wurde zusammen mit dem Pfeffer einer Korngröße von unter 4 mm auf 1000 μm Teilchengröße gemahlen. Die geschälte Kerne werden getrennt davon auf die gleiche Korngröße gemahlen.

In den unterschiedlichen Abschnitten des Verfahrens wurden Proben genommen, und der Gehalt an ätherischen Ölen wurde bestimmt (cm³/100 g Trockensubstanz). Auch der Feuchtegehalt in Prozent wurde gemessen. Die Durchschnittswerte dieser Messungen sind in der Tabelle 3 zusammengestellt. Als Vergleich sind die betreffenden Daten des herkömmlichen weißen Pfeffers angegeben.

## Tabelle 3

|  | ätherische Öle $(cm^3/g)$ | Feuchte % |
|---|---|---|
| Schwarzer Pfeffer, Kern | 0,79 | 12,3 |
| schwarzer Pfeffer, Schale | 1,82 | 10,7 |
| weißer Pfeffer | 0,54 | 13,4 |

Aus der Tabelle 3 ist ersichtlich, daß der Gehalt des mittels des erfindungsgemäßen Verfahrens aus den geschälten Kernen des schwarzen Pfeffers hergestellten Pfeffers an ätherischen Ölen und Wasser zwischen den jeweiligen Werten des schwarzen beziehungsweise weißen Pfeffers liegt, dem weißen Pfeffer jedoch bedeutend näher steht.

Duft, Aroma und Geschmack der gemahlenen Kerne des schwarzen Pfeffers sind dem Duft, Aroma und Geschmack des weißen Pfeffers völlig gleich, deshalb kann das Produkt als vollwertiger Ersatz des weißen Pfeffers verwendet werden.

Auch die im Laufe des Verfahrens abgeschälten Schalen und oberen Schichten des Pfefferkornes gehen nicht verloren, sondern können im Gemisch mit normalem schwarzem Pfeffer verwertet werden.

Ist der rohe Pfeffer stockig (moderig), so verschwindet der Modergeruch im Laufe der erfindungsgemäßen Aufarbeitung völlig, ohne daß sich das Aroma ändert.

**Patentansprüche**

1. Verfahren zur Verarbeitung von schwarzem Pfeffer, bei welchem
– die Körner des schwarzen Pfeffers gereinigt werden,
– die gereinigten Körner des schwarzen Pfeffers nach Korngrößen klassifiziert werden, und zwar in eine kleinste schälbare Fraktion, bei der die Körner 3,5 mm bis 4,2 mm groß sind, und in wenigstens eine weitere schälbare Fraktion,
– die Körner der klassifizierten schälbaren Fraktionen getrennt voneinander in einer Schälmaschine (11) für sphärische Körner geschält werden, wobei die Schälmaschine immer gefüllt gehalten wird,
– die beim Schälen der Körner der schälbaren Fraktionen abgetrennten Schalen- und Kernteile mit einem auch kühlend wirkenden Luftstrom abgeführt werden,
– die mit dem Luftstrom abgeführten Schalen- und Kernteile wiedergewonnen werden,
– die wiedergewonnenen Schalen- und Kernteile als schwarzer Pfeffer verwertet werden und
– die geschälten und von Schalen- und Kernteilen befreiten Körner der schälbaren Fraktionen zu einem Gewürz vom Charakter des weißen Pfeffers gemahlen werden.

2. Verfahren nach Anspruch 1, bei welchem das Schälen in mehreren Zyklen vorgenommen wird.

3. Verfahren nach Anspruch 1 oder 2, bei welchem die nichtschälbaren Körner, die kleiner sind als die untere Korngröße der kleinsten schälbaren Fraktion, zusammen mit den zurückgewonnenen Schalen- und Kernteilen gemahlen werden und das gewonnene Mahlgut zum Verschneiden von gemahlenem schwarzen Pfeffer verwendet wird.

4. Verfahren nach einem der Ansprüche 1 bis 3, bei welchem als kleinste Korngröße für die kleinste schälbare Fraktion 4 mm und als unterste Korngröße der weiteren schälbaren Fraktion 5 mm gewählt wird.

5. Verfahren nach einem der Ansprüche 1 bis 4, bei welchem als Ausgangsmaterial stockig gewordener schwarzer Pfeffer verarbeitet wird.

**Claims**

1. Process for working black pepper, in which
– the black pepper corns are cleaned,
– the cleaned black pepper corns are classified according to corn size, namely a smallest part that can be husked, in the case of which the corns are 3.5 mm to 4.2 mm in size, and at least a further part that can be husked,
– the corns of the classified parts that can be husked are husked separately from one another in a husking machine (11) for spherical corns, the husking machine being kept constantly full,
– the shell and kernel parts separated when the corns of the parts which may be husked are husked are carried away with a current of air which also has a cooling effect,
– the shell and kernel parts carried away with the current of air are recovered again,
– the recovered shell and kernel parts are used as black pepper and
– the corns of the parts which can be husked which are husked and released from the shell and kernel parts are ground to a condiment of the nature of white pepper.

2. Process according to claim 1, in which the husking process is carried out in a plurality of cycles.

3. Process according to claims 1 or 2, in which the corns which may not be husked, which are smaller than the lower corn size of the smallest parts which may be husked, are ground together with the recovered shell and kernel parts and the recovered material to be ground is used to blend ground black pepper.

4. Process according to one of claims 1 to 3, in which 4 mm is selected as the smallest corn size for the smallest part that can be husked and 5 mm is selected as the lowest corn size of the further parts that can be husked.

5. Process according to one of claims 1 to 4, in which the rotted black pepper is processed as a starting material.

**Revendications**

1. Procédé de préparation de poivre noir, dans lequel
– les grains de poivre noir sont nettoyés,
– les grains nettoyés de poivre noir sont classés par granulométrie et ce, en une fraction décorticable de plus faible granulométrie, dans laquelle les grains ont une dimension de 3,5 mm à 4,2 mm, et en au moins une autre fraction décorticable,
– les grains des fractions décorticables classées sont décortiqués, séparément les uns des autres, dans une machine à décortiquer (11) des grains sphériques, la machine à décortiquer étant toujours maintenue remplie,
– les parties d'écorce et de noyau séparées lors du décorticage des grains des fractions décorticables sont évacuées par un courant d'air ayant également un effet de refroidissement,
– les parties d'écorce et de noyau évacuées par le courant d'air sont récupérées,
– les parties d'écorce et de noyau récupérées sont utilisées comme poivre noir, et
– les grains libérés des parties d'écorce et de noyau des fractions décorticables sont moulus en un condiment au caractère du poivre blanc.

2. Procédé selon la revendication 1, dans lequel le décorticage est réalisé en plusieurs cycles.

3. Procédé selon la revendication 1 ou 2, dans lequel les grains non-décorticables, qui sont plus petits que la granulométrie de la fraction décorticable de plus faible granulométrie, sont moulus ensemble avec les parties d'écorce et de noyau récupérées et la matière broyée obtenue est utilisée pour le coupage du poivre noir moulu.

4. Procédé selon l'une des revendications 1 à 3, dans lequel il est choisi 4 mm comme granulométrie inférieure pour la fraction décorticable la plus petite et 5 mm comme granulométrie inférieure pour l'autre fraction décorticable.

5. Procédé selon l'une des revendications 1 à 4, dans lequel, on traite, comme matière de départ du poivre noir gâté par l'humidité.